(19) Europäisches Patentamt
European Patent Office
Office européen des brevets

(11) Veröffentlichungsnummer: **0 284 953**
**B1**

(12) # EUROPÄISCHE PATENTSCHRIFT

(45) Veröffentlichungstag der Patentschrift: **05.09.90**

(51) Int. Cl.[5]: **C08L 35/00,** C08K 5/29, C09D 139/00

(21) Anmeldenummer: **88104543.9**

(22) Anmeldetag: **22.03.88**

(54) **Unter dem Einfluss von Feuchtigkeit härtbare Bindemittelkombinationen, ein Verfahren zu ihrer Herstellung und ihre Verwendung.**

(30) Priorität: **01.04.87 DE 3710963**

(43) Veröffentlichungstag der Anmeldung: **05.10.88 Patentblatt 88/40**

(45) Bekanntmachung des Hinweises auf die Patenterteilung: **05.09.90 Patentblatt 90/36**

(84) Benannte Vertragsstaaten: **AT BE CH DE ES FR GB IT LI NL SE**

(56) Entgegenhaltungen: **EP-A- 0 012 269**

(73) Patentinhaber: **BAYER AG, D-5090 Leverkusen 1 Bayerwerk(DE)**

(72) Erfinder: **Blum, Harald, Dr., Auf dem Westkamp 1, D-4175 Wachtendonk(DE)**
Erfinder: **Pedain, Josef, Dr., Haferkamp 6, D-5000 Köln 80(DE)**
Erfinder: **Wamprecht, Christian, Dr., Wilhelmstrasse 100, D-4150 Krefeld(DE)**

EP 0 284 953 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft unter dem Einfluß von Feuchtigkeit aushärtbare Bindemittelkombinationen, bestehend im wesentlichen aus speziellen Maleinsäureanhydridcopolymerisaten und mindestens difunktionellen organischen Polyaminen in Ald- und/oder Ketimin-blockierter Form, ein Verfahren zur Herstellung dieser Bindemittelkombinationen und ihre Verwendung als Bindemittel in Lacken, Beschichtungs- und Dichtmassen.

Die Umsetzung von Aminen mit Anhydriden ist eine bereits bei Raumtemperatur rasch ablaufende Reaktion, die unter Anhydridringspaltung zu Carbonsäurehalbamiden führt. Die daraus resultierenden, extrem kurzen Standzeiten verhindern bisher die gemeinsame Verwendung von Polyanhydriden und Polyaminen in Beschichtungssystemen. Selbst 2K-Bindemittel können nicht applikationssicher angewendet werden.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens 2 cyclischen Carbonsäureanhydridgruppen im Molekül, insbesondere Umsetzungsprodukte von Polyolen mit cyclischen Dianhydriden bei einem Hydroxyl-/Anhydridgruppenverhältnis von 1:2, oder Copolymerisate eines ungesättigten cyclischen Anhydrids mit mehrfach ungesättigten Verbindungen oder $\alpha$-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomeren, die bei der Hertstellung der Copolymerisate zum Einsatz gelangen sollen. Die konkrete Offenbarung der Ausführungsbeispiele beschränkt sich auf Copolymerisate aus Butadienöl und Maleinsäureanhydrid im Verhältnis 1:1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt. Im übrigen führen Beschichtungsmittel, die als Bindemittelkomponente ungesättigte Öle wie Butadienöl oder Holzöl enthalten zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20 % zur Anwendung gelangen.

Es war die der Erfindung zugrundeliegende Aufgabe neue Bindemittelkombinationen auf Basis von Anhydridgruppen aufweisenden Copolymerisaten und Ald- und/oder Ketiminblockierten Polyaminen zur Verfügung zu stellen, die nicht mit den genannten Nachteilen behaftet sind, und die zur Herstellung von hochwertigen, unter dem Einfluß von Luftfeuchtigkeit aushärtbaren Systemen geeignet sind, die in vertretbaren Zeiträumen zu klaren, vergilbungsbeständigen, lösungsmittelfesten Filmen ausgehärtet werden können.

Diese Aufgabe konnte durch die Bereitstellung der nachstehend näher beschriebenen erfindungsgemäßen Bindemittelkombinationen gelöst werden. In den erfindungsgemäßen Bindemittelkombinationen liegen neben organischen Polyaminen in Ald- und/oder Ketimin-blockierter Form ausgewählte Maleinsäureanhydridcopolymerisate vor.

Gegenstand der Erfindung sind unter dem Einfluß von Feuchtigkeit härtbare Bindemittelkombinationen enthaltend

A) Copolymerisate des Molekulargewichtsbereichs Mw von 1500 bis 75 000 von Maleinsäureanhydrid mit anderen olefinisch ungesättigten Monomeren
und
B) organische Polyamine mit ausschließlich in Aldund/oder Ketimin-blockierter Form vorliegenden Aminogruppen,
dadurch gekennzeichnet, daß es sich bei der Komponente A) um in an sich bekannter Weise hergestellte Copolymerisate von
a) 3 bis 45 Gew.-% Maleinsäureanhydrid,
b) 5 bis 80 Gew.-% Monomeren der Formel

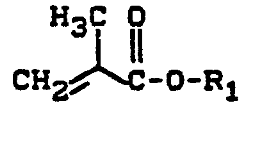 ,

und/oder der Formel

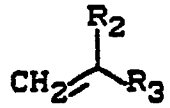 ,

c) 15 bis 92 Gew.-% Monomeren der Formel

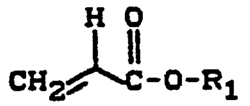 ,

und

d) 0 bis 20 Gew.-% an flüssigen Butadien(co)polymerisaten eines als Zahlenmittel bestimmten mittleren Molekulargewichts von 500 bis 3500 und einer Viskosität bei 20°C von 200 bis 50 000 mPa.s und einer Iodzahl nach Wijs von 380 bis 470 g Iod/100 g Substanz

handelt, wobei sich die genannten Prozentsätze zu 100 ergänzen, und wobei in den genannten Formeln

$R_1$ für einen aliphatischen oder cycloaliphatischen, gegebenenfalls Sauerstoff, Schwefel oder Stickstoff als Heteroatome enthaltenden Kohlenwasserstoffrest mit 1 bis 12 Kohlenstoffatomen steht,

$R_2$ für Wasserstoff, eine Methyl- oder Ethylgruppe oder für Chlor oder Fluor steht, und

$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht. Gegenstand der Erfindung sind auch spezielle derartige Bindemittelkombinationen, die dadurch gekennzeichnet sind, daß sie als weitere Komponente

C) Amidgruppen aufweisende Umsetzungsprodukte von

i) Copolymerisaten A)

mit

ii) sowohl freie als auch blockierte, insgesamt mindestens 2 primäre und gegebenenfalls sekundäre Aminogruppen aufweisenden organischen Polyaminen, die (im statistischen Mittel) höchstens eine freie primäre oder sekundäre Aminogruppe und mindestens eine in Ald- und/oder Ketimin-blockierter Form vorliegende primäre Aminogruppe aufweisen,

enthalten.

Gegenstand der Erfindung ist auch ein Verfahren zur Herstellung dieser Bindemittelkombinationen, welches dadurch gekennzeichnet ist, daß man die Maleinsäureanhydridcopolymerisate A) mit B) organischen Polyaminen mit ausschließlich in Ald- und/oder Ketimin-blockierter Form vorliegenden primären Aminogruppen und gegebenenfalls C) organischen Polyaminen mit freien und in Ald- und/oder Ketimin-blockierter Form vorliegenden Aminogruppen, die höchstens eine freie und mindestens eine blockierte Aminogruppe aufweisen, gegebenenfalls unter Mitverwendung von Lösungsmitteln und/oder sonstigen aus der Lacktechnologie bekannten Hilfs- und Zusatzstoffen miteinander vermischt, wobei die Mengenverhältnisse der Einzelkomponenten unter Einbeziehung der zwischen freien Aminogruppen und Anhydridgruppen spontan ablaufenden Kondensationsreaktion so wählt, daß in dem resultierenden Gemisch auf jede blockierte Aminogruppe 0,25 bis 5 Anhydridgruppen entfallen.

Gegenstand der Erfindung ist auch die Verwendung dieser Bindemittelkombinationen als Bindemittel in unter dem Einfluß von Feuchtigkeit aushärtbaren Lacken, Beschichtungs- oder Dichtmassen.

Die Komponente A) der erfindungsgemäßen Bindemittelkombinationen besteht aus Copolymerisaten von Maleinsäureanhydrid mit Monomeren der oben unter b) und c) genannten Art, wobei gegebenenfalls auch Butadien(co)polymerisate der oben unter d) genannten Art mitverwendet werden können obwohl dies aus den obengenannten Gründen weniger bevorzugt ist.

Bevorzugte Monomere b) und c) sind solche der obengenannten allgemeinen Formeln, für welche

$R_1$ für einen linearen oder verzweigten aliphatischen Kohlenwasserstoffrest mit 1 bis 8 Kohlenstoffatomen steht,

$R_2$ für Wasserstoff oder eine Methylgruppe steht und

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht.

Typische Beispiele für geeignete, bzw. bevorzugt geeignete Reste $R_1$ sind Methyl-, Ethyl-, n-Propyl-, Isopropyl-, n-Butyl-, Isobutyl-, n-Pentyl-, n-Hexyl-, 2-Ethylhexyl-, n-Octyl-, n-Decyl- oder n-Dodecylreste.

Typische Beispiele für geeignete bzw. bevorzugte Reste $R_2$ sind Wasserstoff, Methyl, Ethyl, Chlor oder Fluor.

Typisch Beispiele für geeignete bzw. bevorzugte Reste $R_3$ sind aliphatische Reste der soeben für $R_1$ beispielhaft genannten Art und außerdem Phenyl-, Cyclohexyl-, 2-, 3- und 4-Methylphenyl-, Propoxy-, n-Butoxy-, Acetyl-, Propionyl-, n-Butyryl- oder N-Methoxymethyl-aminocarbonyl-Reste.

Bei der gegebenenfalls mitzuverwenden Komponente d) handelt es sich um niedermolekulare, flüssige Butadienpolymerisate mit als Zahlenmittel bestimmten Molekulargewichten $M_n$ von 500 - 3500, Viskositäten von 200 - 50 000 mPa.s (bei 20°C), Iodzahlen nach Wijs von 320 - 470 g Iod/100 g Substanz wie z.B. Polyöl 110 oder Polyöl 130 von Hüls AG (Butadienhomopolymerisate mit ca. 99 % 1,4-cis- bzw. 1,4-trans-Verknüpfungen und ca. 1 % 1,2 Vinylstruktur), ®Nisso-Pb 1000, Pb 2000, Pb 3000 von Nippon Soda Co., Ltd. (Butdienhomopolymerisate mit mehr als 85 % 1,2 Vinylstruktur), ®Lithene AL, AH, PL, PM, PH, PM-N, PN-2000, PH-4 von Chemetall GmbH (Butadienhomopolymerisate mit 20 - 50 % Vinylstruktur, 0 - 20 % cyclischen Anteilen und 30 - 80 % 1,4-cis- bzw. 1,4-trans-Verknüpfung).

Bevorzugte Komponenten A) sind solche, in denen

a) 3 bis 45 Gew.-%, vorzugsweise 7 bis 30 Gew.-% Maleinsäureanhydrid,
b) 8 bis 60 Gew.-%, insbesondere 10 bis 50 Gew.-% an Monomeren der Formeln

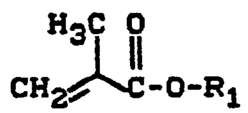 und/oder 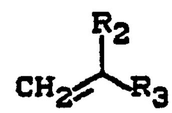 ,

und

c) 20 bis 70 Gew.-%, insbesondere 25 bis 60 Gew.-% an Monomeren der Formel

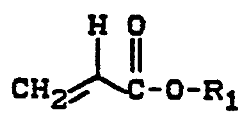

in copolymerisierter Form vorliegen.

Besonders bevorzugt werden als Komponente A) solche Copolymerisate eingesetzt, in denen pro 100 Gew.-Teilen Maleinsäureanhydrid 60 bis 140 Gew.-Teile an anderen Monomeren ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

Die Komponente A), d.h. die Maleinsäureanhydridcopolymerisate weisen als als Gewichtsmittel bestimmtes Molekulargewicht von 1500 bis 75 000, vorzugsweise 4500 bis 35 000 auf. Sie werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind. Geeignet sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösungsmittel.

Die Copolymerisation wird üblicherweise bei Feststoffgehalten von 30 - 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerumsatz von mehr als 96 %, bevorzugt mehr als 99 % beendet. Gegebenenfalls ist es erforderlich durch nachträgliche Zugabe von geringen Initiatormengen eine Nachaktivierung vorzunehmen, um den

gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomermischung, wie z.B. Styrol, Butylacrylat, zu reduzieren.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180°C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2'-Azobis-(2,4-dimethylvaleronitril), 2,2'-Azobis-(isobutyronitril), 2,2'-Azobis-(2,3-dimethylbutyronitril), 1,1'-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan, Mercaptoethanol usw., in Mengen von 0 bis 10 Gew.-% eingesetzt werden.

Bei der Komponente B) handelt es sich um organische Polyamine mit ausschließlich aliphatischen und/oder cycloaliphatisch gebundenen primären Aminogruppen, die vollständig in Ald- und/oder Ketiminblockierter Form vorliegen. Es handelt sich somit um Verbindungen, die mindestens 2 funktionelle Gruppen der Struktur

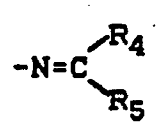

aufweisen, wobei $R_4$ und $R_5$ für gleiche oder verschiedene Reste stehen und Wasserstoff oder inerte organische Reste, insbesondere aliphatische Kohlenwasserstoffreste mit 1 bis 18, vorzugsweise 1 bis 8 Kohlenstoffatomen stehen, die auch zusammen mit dem Kohlenstoffatom zu einem cycloaliphatischen Ring, insbesondere einem Cyclohexanring verknüpft sein können.

Die Herstellung dieser blockierten Polyamine gelingt in an sich bekannter Weise durch Umsetzung von entsprechenden Aldehyden bzw. Ketonen der Formel

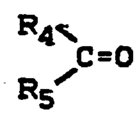 ,

die vorzugsweise ein Molekulargewicht von 72 bis 200 (Ketone) bzw. von 58 bis 128 (Aldehyde) aufweisen, mit geeigneten Polyaminen der nachstehend näher genannten Art.

Geeignete Aldehyde sind beispielsweise Formaldehyd, Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Hexahydrobenzaldehyd, Acrolein, Crotonaldehyd, Propargylaldehyd, p-Toluylaldehyd, Phenylethanal, 2-Methylpentanal, 3-Methylpentanal, 4-Methylpentanal, Sorbinaldehyd. Besonders bevorzugt sind dabei Butyraldehyd, Isobutyraldehyd, Trimethylacetaldehyd, 2,2-Di-methylpropanal, 2-Ethylhexanal, 3-Cyclohexen-1-carboxaldehyd und Hexahydrobenzaldehyd.

Geeignete Ketone sind beispielsweise Aceton, Methylethyleton, Methylpropylketon, Methylisopropylketon, Methylbutylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Cyclopentanon, Methylcyclohexanon, Isophoron, Methyl-tert.-butylketon, 5-Methyl-3-heptanon, 4-Heptylketon, 1-Phenyl-2-propanon, Acetophenon, Methylnonylketon, Dinonylketon, 3,3,5-Trimethylcyclohexanon.

Bevorzugt sind solche Ketone, die einen Siedepunkt von unter 170°C aufweisen und bei Raumtemperatur eine gute Flüchtigkeit zeigen. Besonders bevorzugt sind Methylisobutylketon, Methylisopropylketon, Diethylketon, Diisobutylketon, Methyl-tert.-butylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Komponente B) zum Einsatz gelangenden Polyaminen handelt es sich insbesondere um organische Verbindungen, die mindestens zwei aliphatisch und/oder cycloaliphatisch gebundene primäre Aminogruppen aufweisen. Die Verwendung von solchen Polyaminen, die aromatisch gebundene Aminogruppen aufweisen, ist zwar ebenfalls möglich, jedoch weniger bevorzugt. Die Polyamine weisen im allgemeinen ein von 60 bis 500, vorzugsweise von 88 bis 400 liegendes Molekulargewicht auf,

jedoch können auch höhermolekulare, endständige Aminogruppen aufweisende Prepolymere als Polyaminkomponente bei der Herstellung der Komponente B) eingesetzt werden.

Besonders bevorzugte Polyamine sind diprimäre aliphatische bzw. cycloaliphatische Diamine wie beispielsweise Ethylendiamin, Propylendiamin, Tetramethylendiamin, Trimethylendiamin, Hexamethylendiamin, Isophorondiamin, Bis-(4-aminocyclohexyl)-methan, Bis-aminomethyl-hexahydro-4,7-methano-indan, 1,4-Cyclohexandiamin, 1,3-Cyclohexandiamin, 2-Methylcyclohexandiamin, 4-Methylcyclohexandiamin, 2,2,5-Trimethylhexandiamin, 2,2,4-Trimethylhexandiamin, 1,4-Butandiol-bis-(3-aminopropyl)-ether, 2,5-Diamino-2,5-dimethylhexan, Bis-aminomethylcyclohexan, Bis-(4-amino-3,5-dimethylcyclohexyl)-methan oder deren Gemische.

Ganz besonders bevorzugt sind Tetramethylendiamin, Hexamethylendiamin, Isophorondiamin, Bis-aminomethyl-cyclohexan, 1,4-Cyclohexan-diamin, Bis-aminomethyl-hexahydro-4,7-methanoindan und Bis-(4-amino-cyclohexyl)-methan.

Neben diesen bevorzugten Diaminen können zur Herstellung der Komponente B) auch endständige primäre Aminogruppen aufweisende Prepolymere eingesetzt werden, d.h. Verbindungen, die mindestens zwei endständige Aminogruppen und ein Molekulargewicht von 500 bis 5000, vorzugsweise 500 bis 2000 aufweisen. Zu diesen Verbindungen gehören beispielsweise die aus der Polyurethanchemie an sich bekannten Aminopolyether, wie sie beispielsweise in der EP-A-00 81 701 beschrieben werden, oder z.B. Amid-, Harnstoff-, Urethan- oder sekundäre Aminogruppen aufweisende Umsetzungsprodukte von mindestens difunktionellen Carbonsäuren, Isocyanaten oder Epoxiden mit Diaminen der oben beispielhaft genannten Art, wobei diese Umsetzungsprodukte noch mindestens zwei primäre Aminogruppen aufweisen. Auch Gemische von derartigen höhermolekularen Polyaminen mit den beispielhaft genannten niedermolekularen Polyaminen können zur Herstellung der Komponente B) zum Einsatz gelangen.

Zu den aromatischen Polyaminen, die im Prinzip auch zur Herstellung der Komponente B) geeignet, jedoch weniger bevorzugt sind, gehören beispielsweise 2,4- und 2,6-Diaminotoluol, 1,4-Diaminobenzol oder 4,4'-Diaminodiphenylmethan.

Die Herstellung der Komponente B) erfolgt durch Umsetzung der Ausgangskomponenten unter Einhaltung eines Äquivalentverhältnisses von Aminogruppen zu Aldehydbzw. Ketogruppen von 1:1 bis 1:1,5. Gegebenenfalls können zur Reaktionsbeschleunigung katalytische Mengen von sauren Substanzen wie beispielsweise p-Toluolsulfonsäure, Chlorwasserstoff, Schwefelsäure oder Aluminiumchlorid mitverwendet werden.

Die Umsetzung erfolgt im allgemeinen innerhalb des Temperaturbereichs von 75 bis 180°C, wobei die Reaktion in Gegenwart eines Schleppmittels zur Entfernung des Reaktionswassers so lange durchgeführt wird, bis die berechnete Menge an Wasser (ca. 1 Mol Wasser pro Mol primären Aminogruppen) abgespalten ist, bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z.B.: Toluol, Xylol, Cyclohexan, Octan.

Die so erhaltenen Rohprodukte können ohne weitere Reinigungsschritte als Komponente B) beim erfindungsgemäßen Verfahren zur Herstellung der Bindemittelkombinationen verwendet werden.

Eine Variante der Herstellung von erfindungsgemäß geeigneten Komponenten B) besteht außerdem beispielsweise darin als Aminkomponente solche Polyamine einzusetzen, die neben mindestens zwei primären Aminogruppen noch mindestens eine sekundäre Aminogruppe aufweisen. Hierzu gehören beispielsweise Diethylentriamin, Triethylentetramin, Tetraethylenpentamin, Dipropylentriamin oder Tripropylentetramin. Diese Amine können, wie beschrieben, ebenfalls mit Aldehyden und/oder Ketonen unter Einhaltung eines Äquivalentverhältnisses von primären Aminogruppen zu Aldehyd- bzw. Ketogruppen von 1:1 zu Polyaminen mit blockierten primären Aminogruppen überführt werden. Die verbleibenden sekundären Aminogruppen können dann beispielsweise durch Reaktion mit Diisocyanaten wie beispielsweise Isophorondiisocyanat oder Hexamethylendiisocyanat, gegebenenfalls unter Verzweigung der Moleküle, in Harnstoffgruppen überführt werden. Auch die so erhaltenen Produkte stellen dann Polyamine mit blockierten primären Aminogruppen dar, die als Komponente B) in den erfindungsgemäßen Bindemittelkombinationen eingesetzt werden können.

Bei der in den erfindungsgemäßen Bindemittelkombinationen neben den Komponenten A) und B) gegebenenfalls vorliegenden Komponente C) handelt es sich um Amidgruppen aufweisende Umsetzungsprodukte von Maleinsäurecopolymerisaten der Art der Komponente A) mit solchen organischen Polyaminen, die insgesamt mindestens zwei primäre und sekundäre, vorzugsweise ausschließlich primäre, vorzugsweise aliphatisch oder cycloaliphatisch gebundene Aminogruppen aufweisen, die zum Teil als freie Aminogruppen und zum Teil in Ald- und/oder Ketimin-blockierter Form vorliegen. Diese teilblockierten Polyamine weisen (im statistischen Mittel) höchstens eine freie primäre oder sekundäre, vorzugsweise primäre Aminogruppe und mindestens eine Ald-und/oder Ketimin-blockierte primäre Aminogruppe auf. Geeignete derartige teilblockierte Polyamine sind beispielsweise die weiter oben beschriebenen Umsetzungsprodukte von solchen Polyaminen, die neben zwei primären Aminogruppen noch sekundäre Aminogruppen aufweisen mit Aldehyden und/oder Ketonen oder aber teilblockierte primäre Polyamine, die entsprechend den oben gemachten Ausführungen unter Einhaltung eines Äquivalentverhältnisses von primären Aminogruppen zu Aldehyd- bzw. Ketogruppen von größer als 1:1, d.h. von bis zu ca. 1,5:1 hergestellt worden sind.

Die Herstellung von solchen erfindungsgemäßen Bindemittelkombinationen, die neben den Komponenten A) und B) auch noch Komponenten C) aufweisen, kann beispielsweise dergestalt erfolgen, daß man ein Gemisch aus den Komponenten A) und B) und aus teilblockierten Polyaminen der genannten Art herstellt, wobei die freien Aminogruppen spontan mit einem Teil der Komponente A) unter der Bildung der Komponente C) abreagieren.

Die Herstellung dieser speziellen erfindungsgemäßen Bindemittelkombinationen kann jedoch auch dergestalt erfolgen, daß man die Komponente A) mit einem teilblockierten Polyamin mit ausschließlich primären Aminogruppen, wie es durch Umsetzung von primären Polyaminen mit unterschüssigen Mengen an Aldehyden und/oder Ketonen erhalten werden ist, vermischt. Da derartige teilblokkierte Polyamine statistische Gemische darstellen, in denen auch völlig blockierte Polyamine vorliegen, bilden diese die Komponente B) des erhaltenen Gemischs, während die teilblockierten Anteile des Polyamingemischs spontan mit einem Teil der Komponente A) unter Bildung der Komponente C) abreagieren.

Bei allen Varianten der Herstellung der erfindungsgemässen Bindemittelkombinationen werden die Mengenverhältnisse der zur Herstellung der Kombinationen eingesetzten Ausgangsmaterialien so gewählt, daß unter Einbeziehung der evtl. spontan zwischen Säureanhydridgruppen freien Aminogruppen ablaufenden Reaktion in den letztendlich erhaltenen Bindemittelkombinationen für jede Anhydridgruppe 0,25 bis 5, vorzugsweise 0,5 bis 2 und besonders bevorzugt 0,9 bis 1,3 blockierte Aminogruppen vorliegen, wobei sich die blockierten Aminogruppen zu 0 bis 25 Äquivalentprozent aus in der gegebenenfalls vorliegenden Komponente C) vorliegenden blockierten Aminogruppen zusammensetzen. Vorzugsweise liegen in den erfindungsgemäßen Bindemittelkombinationen 60 bis 95 Gew.-Teile der Komponente A), 5 bis 40 Gew.-Teile der Komponente B) und 0 bis 25 Gew.-Teile der Komponente C) vor.

Bei der Herstellung der erfindungsgemäßen Bindemittelkombinationen können selbstverständlich jeweils beliebige Gemische unterschiedlicher Einzelkomponenten A), B) und gegebenenfalls C) zur Anwendung gelangen.

Den erfindungsgemäßen Bindemittelkombinationen können vor, während oder nach ihrer Herstellung durch Vermischen der Einzelkomponenten inerte organische Lösungsbzw. Verdünnungsmittel der oben bereits beispielhaft genannten Art zugegeben werden. Gegebenenfalls können diese Lösungs- bzw. Verdünnungsmittel auch schon während der Herstellung einer oder mehrerer Ausgangskomponenten zugegen sein, wie dies z.B. vorstehend bei der Herstellung der erfindungsgemäßen Maleinsäureanhydridcopolymerisate beschrieben ist. Die Lösungs- bzw. Verdünnungsmittel sollten weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der erfindungsgemäßen Kombinationen liegt in der Regel zwischen 40 und 80 %. Durch Verwendung geeigneter niedermolekularer Maleinsäureanhydridcopolymerisate ist es jedoch auch prinzipiell möglich, den Lösungs- bzw. Verdünnungsmittelgehalt noch weiter zu reduzieren.

Die erfindungsgemäßen Kombinationen stellen im allgemeinen bei Raumtemperatur flüssige Gemische dar, die in Abwesenheit von Wasser ausreichend lagerstabil sind und nach Applikation auf ein Substrat in Gegenwart von Luftfeuchtigkeit rasch aushärten.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130°C und Trocknungszeiten von 10 bis 30 Minuten vorteilhaft.

Bei Verwendung von besonders hydrolysestabilen Polyketiminen, Polyaldiminen bzw. Polyketaldiminen kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Kombinationen als Bindemittel enthaltenden, Lacke, Beschichtungs- und Dichtmassen können die in der Lacktechnologie üblichen Hilfs- und Zusatzstoffe, wie beispielsweise Pigmente, Füllstoffe, Verlaufhilfsmittel, Antioxidantien oder UV-Absorber enthalten.

Diese Hilfs- und Zusatzstoffe sollten möglichst wasserfrei sein und werden vorzugsweise bereits vor der Herstellung der erfindungsgemäßen Kombinationen den Ausgangskomponenten, im allgemeinen der Komponente A) einverleibt.

Die, die erfindungsgemäßen Kombinationen als Bindemittel enthaltenden Lacke, Beschichtungs- und Dichtmassen weisen in Abwesenheit von Feuchtigkeit im allgemeinen eine Topfzeit von 3 bis 72 Stunden auf. Durch Auswahl geeigneter Reaktionspartner, kann die Topfzeit jedoch beliebig nach oben oder unten korrigiert werden. Die Lacke, Beschichtungs- und Dichtmassen können nach den üblichen Methoden, beispielsweise durch Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -Teile falls nicht anders vermerkt, auf das Gewicht.

## Beispiele

### 1 Herstellung der Maleinsäureanhydridcopolymerisate A

Allgemeine Herstellvorschrift für die Maleinsäureanhydridcopolymerisate $A_1$ - $a_6$:

In einem 4-l-Reaktionsgefäß mit Rühr-, Kühl- und Heizvorrichtung wird Teil I vorgelegt, auf Reaktionstemperatur aufgeheizt und in 2 Stunden Teil II und in 2 1/2 Stunden Teil III zudosiert. Anschließend wird 3 Stunden nachgerührt.

Die Reaktionstemperaturen und die Zusammensetzung der Teile I - III sind in Tabelle 1, zusammen mit Festgehalt und Viskosität der erhaltenen Maleinsäureanhydridcopolymerisatlösungen aufgeführt.

**Tabelle 1** (Mengenangaben in g)

| | $A_1$ | $A_2$ | $A_3$ | $A_4$ | $A_5$ | $A_6$ |
|---|---|---|---|---|---|---|
| **Teil I** | | | | | | |
| Butylacetat | 1050 | 1050 | 1050 | 1050 | 700 | 600 |
| **Teil II** | | | | | | |
| 2-Ethylhexylacrylat | | | | | | 217 |
| Methylmethacrylat | 859 | 658 | 554 | 300 | 463 | 493 |
| Styrol | 313 | 213 | 160 | 213 | 173 | 226 |
| Butylacrylat | 300 | 600 | 831 | 958 | 255 | |
| Maleinsäureanhydrid | 284 | 284 | 210 | 284 | 174 | 205 |
| Polybutadien Nisso B 1000 | | | | | 93 | |
| Butylvinylether | | | | | | 125 |
| t-Dodecylmercaptan | | | | | 50 | |
| **Teil III** | | | | | | |
| tert.-Butylperoctoat[1] | 105 | 105 | 105 | 105 | 17 | 75 |
| Butylacetat | 89 | 90 | 90 | 90 | 75 | 57 |
| Reaktionstemperatur (°C) | 115 | 110 | 110 | 110 | 120 | 121 |
| Verdünnt mit Butylacetat | 271 | | | | | 119 |
| Festgehalt (%) | 55,2 | 60,1 | 60,4 | 60,6 | 59,5 | 61,2 |
| Viskosität (mPa.s)[2] | 11120 | 13090 | 3350 | 1950 | 16360 | 18320 |

1 tert.-Butylperoctoat wird 70 %ig in einem Kohlenwasserstoffgemisch gelöst eingesetzt.
2 gemessen bei 23°C.

Allgemeine Herstellvorschrift für Maleinsäureanhydridcopolymericate $A_7$ - $A_{14}$.

In einem 4-l-Reaktionsgefäß mit Rühr-, Kühl- und Heizvorrichtung wird Teil I vorgelegt, auf Reaktionstemperatur aufgeheizt und dann Teil II in 3 Stunden, Teil III in 3 Stunden, Teil IV in 4 Stunden parallel zudosiert und anschließend 1 Stunde nachgerührt. Verschiedene Ansätze wurden anschließend andestilliert. Die Reaktionstemperaturen und die Zusammensetzung der Teile I - IV sind in Tabelle 2, zusammen mit Festgehalt und Viskosität der erhaltenen Maleinsäureanhydridcopoylmerisate aufgeführt.

**Tabelle 2** (Mengenangaben in g)

| | $A_7$ | $A_8$ | $A_9$ | $A_{10}$ | $A_{11}$ | $A_{12}$ | $A_{13}$ | $A_{14}$ |
|---|---|---|---|---|---|---|---|---|
| **Teil I** | | | | | | | | |
| Xylol | 900 | | | | | 1360 | | |
| Methoxypropylacetat | | 737,5 | 900 | 1450 | 1200 | | 500 | 1200 |
| **Teil II** | | | | | | | | |
| Styrol | 250 | 262,5 | 50 | 450 | 450 | 300 | 187,5 | 450 |
| Methylmethacrylat | | | 100 | | | | | |
| Butylacrylat | 500 | | | 675 | | 1100 | 1125 | 675 |
| Ethylacrylat | | | 350 | | | | | |
| 2-Ethylhexylacrylat | | 225 | 100 | | 675 | | | |
| Vinyltoluol | | | 50 | | | | | |
| α-Methylstyrol | | | 150 | | | | | |
| Polybutadien Polyöl 110 | 100 | | | | | | | |
| n-Dodecylmercaptan | 30 | | | 1,5 | 1,5 | 2 | | |
| t-Dodecylmercaptan | | 3,75 | 10 | | | | | |
| **Teil III** | | | | | | | | |
| Maleinsäureanhydrid | 150 | 262,2 | 200 | 375 | 375 | 600 | 187,5 | 375 |
| **Teil IV** | | | | | | | | |
| Di-tert.-butylperoxid | 10 | 24,1 | | | | | | |
| tert.-Butylperoctoat (70 %ig) | | | 20 | 42,9 | 42,9 | 57,1 | | |
| Xylol | 100 | | | | | 57 | | |
| Methoxypropylacetat | | 38,8 | 100 | 68,6 | 40 | | 57,5 | 330 |
| Azodiisobuttersäurenitril | | | | | | | 43,5 | 30 |
| Reaktionstemperatur (°C) | 136 | 144 | 120 | 130 | 130 | 130 | 122 | 130 |
| Festgehalt (%) | 50,0 | 52,4 | 50,3 | 50,2 | 54,1 | 61,6 | 60,4 | 49,3 |
| andestilliert auf FK (%) | | | | 60,7 | 58,9 | | 65,4 | 55,7 |
| Viskosität (mPa.s) | 300 | 5210 | 790 | 56300 | 32900 | 152900 | 1370 | 18700 |

Allgemeine Herstellvorschrift für Maleinsäureanhydridcopolymerisate $A_{15}$ - $A_{17}$:

In einem 4-l-Reaktionsgefäß mit Rühr-, Kühl- und Heizvorrichtung wird Teil I vorgelegt und auf Reaktionstemperatur aufgeheizt. Dann werden Teil II und Teil III in 3 Stunden kontinuierlich zudosiert, Teil IV portionsweise in 4 Stunden zugegeben und anschließend 2 Stunden nachgerührt.

Die Reaktionstemperatur und die Zusammensetzung der Teile I - IV sind in Tabelle 3, zusammen mit Festgehalt und Viskosität der erhaltenen Maleinsäureanhydridcopolymerisatlösungen aufgeführt.

**Tabelle 3** (Mengenangaben in g)

| | $A_{15}$ | $A_{16}$ | $A_{17}$ |
|---|---|---|---|
| **Teil I** | | | |
| Butylacetat | | 680 | 780 |
| Methoxypropylacetat | 1000 | | |
| **Teil II** | | | |
| Methylmethacrylat | 600 | | 117 |
| Styrol | 30 | 266 | 209 |
| Butylacrylat | 327,5 | | 363 |
| Hexandiolbisacrylat | 2,5 | | |
| Ethylacrylat | | 621 | |
| Acrylnitril | | | 176 |
| N-Methoxymethylacrylsäureamid | | | 117 |
| Maleinsäureanhydrid | | 253 | 189 |
| n-Dodecylmercaptan | 10 | | |
| Vinylacetat | | 127 | |
| **Teil III** | | | |
| Maleinsäureanhydrid | 40 | | |
| **Teil IV** | | | |
| Azodiisobuttersäurenitril | 20 | 53 | 49 |
| Reaktionstemperatur (°C) | 120 | 80 | 80 |
| Festgehalt (%) | 49,0 | 64,3 | 59,4 |
| verdünnt mit Butylacetat | | 598 | 474 |
| auf FK (%) | | 50,8 | 49,3 |
| Viskosität (mPa.s) | 570 | 11450 | 20610 |

## II Herstellung der Polyketimine, Polyaldimine bzw. Polyketaldimine B

Allgemeine Herstellvorschrift:

Zur Herstellung der Polyketimine, Polyaldimine bzw. Polyketaldimine werden die mindestens difunktionellen Amine sowie die Ketone und/oder Aldehyde und gegebenenfalls das Schleppmittel gemischt und

gegebenenfalls mit etwa 0,01 % - 0,1 % para-Toluolsulfonsäure als Katalysator versetzt. Unter Inertgasatmosphäre (z.B. $N_2$, Ar) wird am Wasserabscheider so lange unter Rückfluß erhitzt, bis die theoretische Wassermenge abgetrennt ist, bzw. bis keine weitere Wasserabscheidung mehr erfolgt. Anschließend werden Schleppmittel und überschüssiges bzw. nichtumgesetztes Blockierungsmittel abdestilliert. Die so erhaltenen Produkte werden direkt, ohne weitere Reinigungs- oder Trennungsschritte, für die erfindungsgemäßen Kombinationen eingesetzt.

B 1 Aus 170 g 3-Aminomethyl-3,3,5-trimethylcyclohexanamin (Isophorondiamin), 355 g Diisobutylketon und 175 g Toluol erhält man nach Abscheiden von 30 g Wasser (theoretische Menge: 36 g) bei 140°C und anschließendem Abdestillieren von überschüssigem Keton und von Toluol das Bisketimin B 1 als Rohprodukt.

B 2 Aus 170 g Isophorondiamin, 280 g 1-Methylcyclohexanon und 150 g Toluol erhält man nach Abscheiden von 35,5 g Wasser (theoretische Menge: 36 g) bei 138°C und anschließendem Abdestillieren von überschüssigem Keton und von Toluol das Bisketimin B 2 als Rohprodukt.

B 3 Aus 170 g Isophorondiamin, 250 g tert.-Butylmethylketon und 140 g Toluol erhält man nach Abscheiden von 33 g Wasser (theoretische Menge: 36 g) bei 120°C und anschließendem Abdestillieren von überschüssigem Keton und von Toluol das Bisketimin B 3 als Rohprodukt.

B 4 Aus 170 g Isophorondiamin, 320 g 5-Methyl-3-heptanon und 163 g Toluol erhält man nach Abscheiden von 35,5 g Wasser (theoretische Menge: 36 g) bei 134°C und anschließendem Abdestillieren von Keton und von Toluol das Bisketimin B 4 als Rohprodukt.

B 5 Aus 170 g Isophorondiamin, 285 g 4-Heptanon und 152 g Toluol erhält man nach Abscheiden von 32 g Wasser (theoretische Menge: 36 g) bei 132°C und anschließendem Abdestillieren das rohe Bisketimin B 5.

B 6 Aus 170 g Isophorondiamin, 285 g 5-Methyl-2-hexanon und 152 g Toluol erhält man nach Abscheiden von 49 g Wasser (theoretische Menge: 36 g) bei 142°C und anschließendem Abdestillieren das rohe Bisketimin B 6.

B 7 Aus 170 g Isophorondiamin, 215 g Methylisopropylketon und 128 g Toluol erhält man nach Abscheiden von 35,5 g Wasser (theoretische Menge: 36 g) bei 115°C und anschließendem Abdestillieren das rohe Bisketimin B 7.

B 8 Aus 170 g Isophorondiamin, 180 g Isobutyraldehyd und 117 g Toluol erhält man nach Abscheiden von 35 g Wasser (theoretische Menge: 36 g) bei 126°C und anschließendem Abdestillieren das rohe Bisaldimin B 8.

B 9 Aus 170 g Isophorondiamin, 275 g 3-Cyclohexen-1-carboxaldehyd und 148 g Toluol erhält man nach Abscheiden von 35,5 g Wasser (theoretische Menge: 36 g) bei 126°C und anschließendem Abdestillieren das rohe Bisaldimin B 9.

B 10 Aus 170 g Isophorondiamin, 320 g 2-Ethylhexanal und 163 g Toluol erhält man nach Abscheiden von 35,5 g Wasser (theoretische Menge: 36 g) bei 138°C und anschließendem Abdestillieren das rohe Bisaldimin B 10.

B 11 Aus 170 g Isophorondiamin, 215 g 2,2-Dimethylpropanal und 128 g Toluol erhält man nach Abscheiden von 44 g Wasser (theoretische Menge: 36 g) bei 110°C und anschließendem Abdestillieren das rohe Bisaldimin B 11.

B 12 Aus 58 g Hexamethylendiamin, 110 g Methylisobutylketon und 168 g Toluol erhält man nach Abscheiden von 16 g Wasser (theoretische Menge: 18 g) bei 118°C und anschließendem Abdestillieren das rohe Bisketimin B 12.

B 13 Aus 116 g Hexamethylendiamin, 245 g Cyclohexanon und 120 g Toluol erhält man nach Abscheiden von 37,5 g Wasser (theoretische Menge: 36 g) bei 138°C und anschließendem Abdestillieren das rohe Bisketimin B 13.

B 14 Aus 116 g Hexamethylendiamin, 275 g 3-Cyclohexen-1-carboxaldehyd und 130 g Toluol erhält man nach Abscheiden von 41 g Wasser (theoretische Menge: 36 g) bei 136°C und anschließendem Abdestillieren das rohe Bisaldimin B 14.

B 15 Aus 93,8 g Hexamethylendiamin, 287 g Diisobutylketon und 157 g Toluol erhält man nach Abscheiden von 24,5 g Wasser (theoretische Menge: 29 g) bei 138°C und anschließendem Abdestillieren das rohe Bisketimin B 15.

B 16 Aus 116 g Hexamethylendiamin, 250 g tert.-Butylmethylketon und 122 g Toluol erhält man nach Abscheiden von 35 g Wasser (theoretische Menge: 36 g) bei 118°C und anschließendem Abdestillieren das rohe Bisketimin B 16.

B 17 Aus 680 g Isophorondiamin, 1000 g Methylisobutylketon und 560 g Toluol erhält man nach Abscheiden von 146 g Wasser (theoretische Menge: 144 g) bei 120°C und anschließendem Abdestillieren das rohe Bisketimin B 17.

B 18 Aus 204 g 1,4-Butandiol-bis-(3-amino-propylether), 250 g Methylisobutylketon und 151 g Toluol erhält man nach Abscheiden von 31 g Wasser (theoretische Menge: 36 g) bei 121°C und anschließendem Abdestillieren das rohe Bisketimin B 18.

B 19 Aus 210 g Bis-(4-amino-cyclohexyl)-methan, 250 g Methylisobutylketon und 153 g Toluol erhält man nach Abscheiden von 28 g Wasser (theoretische Menge: 36 g) bei 130°C und anschließendem Abdestillieren das rohe Bisketimin B 19.

B 20 Aus 150 g Isophorondiamin, 190 g Diethylketon und 113 g Toluol erhält man nach Abscheiden von 26 g Wasser (theoretische Menge: 31,7 g) bei 131°C und anschließendem Abdestillieren das rohe Bisketimin B 20.

B 21 Aus 194 g Bis-aminomethyl-hexahydro-4,7-methanoindan, 250 g Methylisobutylketon und 148 g Toluol erhält man nach Abscheiden von 52 g Wasser (theoretische Menge: 36 g) bei 125°C und anschließendem Abdestillieren das rohe Bisketimin B 21.

B 22 Aus 144 g 2,5-Diamino-2,5-dimethylhexan, 320 g 2-Ethylhexanal und 155 g Toluol erhält man nach Abscheiden von 34,5 g Wasser (theoretische Menge: 36 g) bei 138°C und anschließendem Abdestillieren das rohe Bisaldimin B 22.

B 23 Aus 198 g Bis-(4-aminophenyl)-methan, 250 g Methylisobutylketon und 149 g Toluol erhält man nach Abscheiden von 18 g Wasser (theoretische Menge: 36 g) bei 117°C und anschließendem Abdestillieren das rohe Bisketimin B 23.

B 24 Aus 170 g Isophorondiamin, 125 g Methylisobutylketon, 160 g 2-Ethylhexanal und 152 g Toluol erhält man nach Abscheiden von 32,7 g Wasser (theoretische Menge: 36 g) bei 135°C und anschließendem Abdestillieren das rohe Ketaldimin B24.

B 25 Aus 116 g Hexamethylendiamin, 125 g Methylisobutylketon, 160 g 2-Ethylhexanal und 134 g Toluol erhält man nach Abscheiden von 37,7 g Wasser (theoretische Menge: 36 g) bei 128°C und anschließendem Abdestillieren das rohe Ketaldimin B 25.

B 26 Aus 194 g Bis-aminomethyl-hexahydro-4,7-methanoindan, 90 g Methylethylketon, 107,5 g Methylisobutylketon und 130,5 g Toluol erhält man nach Abscheiden von 48,4 g Wasser (theoretische Menge: 36 g) bei 112°C und anschließendem Abdestillieren das rohe gemischte Bisketimin B 26.

B 27 Aus 103 g Diethylentriamin, 250 g Methylisobutylketon und 151 g Toluol erhält man nach Abscheiden von 35 g Wasser (theoretische Menge: 36 g) bei 126°C ein Bisketimin, das noch eine freie sekundäre Aminogruppe trägt. Abweichend von der allgemeinen Herstellvorschrift werden überschüssiges Keton bzw. Toluol nur teilweise abdestilliert und anschließend bei Raumtemperatur 84 g Hexamethylendiisocyanat langsam zugegeben. Die Temperatur wird durch Eisbadkühlung auf 30°C gehalten. Man erhält so ein Umsetzungsprodukt aus Bisketimin und Diisocyanat im Molverhältnis 2:1 und damit ein tetrafunktionelles Ketimin mit Harnstoffbindungen im Molekül.

III Herstellung der erfindungsgemäßen Bindemittelkombinationen

Die Maleinsäureanhydridcopolymerisate A und Polyketimine, Polyaldimine bzw. Polyketaldimine B werden bei Raumtemperatur miteinander vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Glasplatten aufgezogen, wobei die Filmstärke der Naßfilme 120 bis 150 µm beträgt. Die bei Raumtemperatur aufgezogenen Filme waren alle nach spätestens 90 Minuten klebfrei durchgetrocknet. Nach Alterung, d.h. 16 bis 20 Stunden Trocknung bei Raumtemperatur erhält man vernetzte, klare Filme mit sehr guter Filmmechanik. Verschiedene Filme wurden bei 100°C 20 Minuten im Ofen getrocknet und anschließend beurteilt.

In der folgenden Tabelle 4 werden die Zusammensetzungen der Bindemittelkombinationen, Trocknungstemperaturen, Festgehalte und Anfangsviskositäten sowie Viskositätsverhalten und außerdem die Lösungsmittelfestigkeit als Grad der Vernetzung aufgeführt.

Die Lösungsmittelfestigkeit wird durch einen Wischtest mit einem Methylisobutylketon (MIBK)-getränkten Wattebausch geprüft. Angegeben wird die Zahl der Doppelhübe, nach denen der Film ohne sichtbare Veränderung bleibt.

Die Festgehalte der Bindemittelzusammensetzungen wurden rechnerisch ermittelt, und zwar auf Grundlage der experimentell bestimmten Festgehalte der Maleinsäureanhydridcopolymerisate und unter der Annahme, daß die Polyketimine/Polyaldimine/Polyketaldimine einen Festgehalt von ca. 95 % aufweisen.

**Tabelle 4 (Beispiele)**

| | 1 | 2 | 3 | 4 | 5 | 6 | 7 |
|---|---|---|---|---|---|---|---|
| MSA-Copolymerisat | 100g $A_1$ | 100g $A_2$ | 100g $A_3$ | 100g $A_4$ | 100g $A_{12}$ | 100g $A_{10}$ | 100g $A_{11}$ |
| Vernetzer | 13,0g $B_{16}$ | 15,8g $B_{16}$ | 15,9g $B_{16}$ | 15,9g $B_{16}$ | 16,2g $B_{16}$ | 16,0g $B_{16}$ | 15,5g $B_{16}$ |
| Verdünnungsmittel: | | | | | | | |
| Methoxypropylacetat | | | | | | 16,7g | 15,7g |
| Butylacetat | 11,7 g | 12,3 g | - | - | | | |
| Xylol | | | | | | 20,8 g | |
| Festgehalt Bindemittelkombination | 54,0 % | 58,6 % | 65,0 % | 65,0 % | 56,1 % | 57,2 % | 56,1 % |
| Anfangsviskosität (mPa.s) | 2550 | 1980 | 1140 | 1140 | 700 | 2110 | 2050 |
| Viskosität nach | | | | | | | |
| 5 - 6 Std. (mPa.s) | 2710 | 2180 | 2380 | 1200 | 900 | 2750 | 2750 |
| 24 Std. (mPa.s) | 3450 | 2930 | 3030 | 1580 | 1270 | 3450 | 3200 |
| Aussehen des Films | farblos | farblos | farblos | farblos | spur gelb | farblos | farblos |
| MIBK-Wischtest (nach 16 - 20 Std. Lagerung bei Raumtemperatur) | >200 | >200 | >200 | >200 | >100 | >200 | >100 |

Tabelle 4 (Beispiele)

| | 8 | 9 | 10 | 11 | 12 | 13 | 14 | 15 |
|---|---|---|---|---|---|---|---|---|
| MSA-Copolymerisat | 100g $A_{14}$ | 100g $A_{13}$ | 100g $A_5$ | 100g $A_6$ | 100g $A_7$ | 100g $A_9$ | 100g $A_{13}$ | 100g$A_{14}$ |
| Vernetzer | 14,6g $B_{16}$ | 17,2g $B_{16}$ | 15,7g $B_{16}$ | 16,2g $B_{16}$ | 13,1g $B_{16}$ | 13,2g $B_{16}$ | 7,6g $B_{16}$ | 25,1g $B_{16}$ |
| Verdünnungsmittel: | | | | | | | | |
| Methoxypropylacetat | 10,0 g | - | | | | | | 15 g |
| Butylacetat | | 11 g | 12 g | - | - | - | - | |
| Festgehalt der Bindemittelkombination | 55,9 % | 69,7 % | 59,4 % | 59,7 % | 55,2 % | 55,6 % | 67,5 % | 56,8 % |
| Anfangsviskosität (mPa.s) | 1440 | 770 | 2040 | 2210 | 270 | 800 | 1500 | 4560 |
| Viskosität nach | | | | | | | | |
| 5 - 6 Std. (mPa.s) | 6300 | 870 | 2240 | 2280 | 270 | 940 | 1400 | 4920 |
| 24 Std. (mPa.s) | 7740 | 900 | | | | | 1340 | 5540 |
| 3 Tagen (mPa.s) | | | 4700 | 6800 | 440 | 1940 | | |
| Aussehen des Films | farblos | farblos | farblos | farblos | farblos | farblos | farblos | farblos |
| MIBK-Wischtest (nach 16 - 20 Std. Lagerung bei Raumtemperatur) | >200 | >100 | >100 | >100 | >100 | >100 | >50 | >100 |

**Tabelle 4** (Beispiele)

| | 16 | 17 | 18 | 19 | 20 | 21 | 22 | 23 |
|---|---|---|---|---|---|---|---|---|
| MSA-Copolymerisat | 100g $A_2$ | 100g $A_8$ | 50g $A_8$<br>50g $A_{15}$ | 100g $A_{16}$ | 100g $A_{17}$ | 60g $A_{14}$ | 60g $A_1$ | 60g$A_1$ |
| Vernetzer | 27,1g $B_{16}$ | 13,8g $B_{16}$ | 13,3g $B_{16}$ | 13,3g $B_{26}$ | 13,0g $B_{16}$ | 17,3g $B_{16}$ | 8,4g $B_{16}$ | 11,0g $B_{15}$ |
| Verdünnungsmittel: | | | | | | | | |
| Methoxypropylacetat | | 5,6 g | - | | | 7 g | | |
| Butylacetat | 13,4 g | | | 31,6 g | 17,0 g | | 4,7 g | 6 g |
| Festgehalt der Bindemittelkombination | 61,0 % | 54,9 % | 55,9 % | 43,8 % | 43,3 % | 60,0 % | 65,1 % | 56,3 % |
| Anfangsviskosität (mPa.s) | 2280 | 2080 | 1200 | 5200 | 8830 | 3240 | 5020 | 10800 |
| Viskosität nach | | | | | | | | |
| 5 - 6 Std. (mPa.s) | 2450 | 3140 | 1440 | 20010 | geliert | 3560 | 5710 | 28100 |
| 24 Std. (mPa.s) | 2620 | 4500 | 1750 | geliert | | 5020 | 5650 | geliert |
| Aussehen des Films | farblos | spur gelb | farblos | farblos | farblos | farblos | farblos | farblos |
| MIBK-Wischtest (nach 16 - 20 Std. Lagerung bei Raumtemperatur) | >100 | >100 | >50 (nach 20 Min 100°C) | >100 | >100 | >100 | >100 | >100 |

**Tabelle 4** (Beispiele)

| | 24 | 25 | 26 | 27 | 28 | 29 | 30 | 31 |
|---|---|---|---|---|---|---|---|---|
| MSA-Copolymerisat | 60g $A_{14}$ | 60g $A_{14}$ | 60g $A_{14}$ | 60g $A_1$ | 60g $A_2$ | 60g $A_2$ | 60g $A_2$ | 60g $A_2$ |
| Vernetzer | 17,5g $B_6$ | 17,2g $B_9$ | 17,3g $B_2$ | 11,1g $B_{18}$ | 12,0g $B_{19}$ | 9,5g $B_{20}$ | 11,8g $B_{21}$ | 10,8g $B_{26}$ |
| Verdünnungsmittel: | | | | | | | | |
| Methoxypropylacetat | 3,7g | 3,7g | 7,0g | | | | | |
| Butylacetat | | | | 6,9g | 7,0g | 7,0g | 7,0g | 7,0g |
| Xylol | | | | | | | | |
| Festgehalt der Bindemittelkombination | 62,4 % | 62,6 % | 60,0 % | 55,8 % | 60,0 % | 58,8 % | 59,9 % | 59,5 % |
| Anfangsviskosität (mPa.s) 1 | 3970 | 1300 | 3240 | 2250 | 1700 | 4410 | 3120 | 4790 |
| Viskosität nach | | | | | | | | |
| 5 - 6 Std. (mPa.s) | 17150 | 4080 | 3560 | 13500 | 24000 | 5130 | 8050 | 23720 |
| 24 Std. (mPa.s) | geliert | 4190 | 5020 | geliert | geliert | 6280 | geliert | geliert |
| Aussehen des Films | spur gelb | farblos | farblos | farblos | farblos | farblos | farblos | farblos |
| MIBK-Wischtest (nach 16 - 20 Std. Lagerung bei Raumtemperatur) | )100 | )50 | )100 | )100 | )100 | )100 | )100 | )100 |

Tabelle 4 (Beispiele)

| | 32 | 33 | 34 | 35 | 36 | 37 | 38 | 39 |
|---|---|---|---|---|---|---|---|---|
| MSA-Copolymerisat | 60g $A_{14}$ | 60g $A_{13}$ | 60g $A_3$ | 60g $A_3$ | 60g $A_3$ | 60g $A_2$ | 60g $A_2$ | 60g $A_2$ |
| Vernetzer | 17,5g $B_7$ | 19,5g $B_{27}$ | 6,8g $B_{12}$ | 6,8g $B_{13}$ | 7,4g $B_{14}$ | 11,9g $B_{24}$ | 10,7g $B_{25}$ | 11,9g $B_{23}$ |
| Verdünnungsmittel: | | | | | | | | |
| Methoxypropylacetat | 3,7g | 7,0g | | | | | | |
| Butylacetat | | | 5,0g | 5,0g | 4,0g | 7,0g | 7,0g | 7,0g |
| Festgehalt der Bindemittelkombination | 62,6 % | 63,0 % | 59,7 % | 59,7 % | 60,5 % | 59,9 % | 59,3 % | 60,0 % |
| Anfangsviskosität (mPa.s) | 2410 | 2050 | 1400 | 2140 | 1940 | 2680 | 2970 | 5130 |
| Viskosität nach | | | | | | | | |
| 5 - 6 Std. (mPa.s) | 3330 | geliert | 19000 | 5860 | 2270 | 5130 | 17800 | geliert |
| 24 Std. (mPa.s) | 3970 | | geliert | geliert | 2930 | 14720 | geliert | |
| Aussehen des Films | farblos | farblos | farblos | farblos | spur gelb | spur gelb | spur gelb | spur gelb |
| MIBK-Wischtest (nach 16 - 20 Std. Lagerung bei Raumtemperatur) | >50 | >100 | >50 | >100 | >50 | >50 | >100 | >100 |

**Tabelle 4** (Beispiele)

| | 40 | 41 | 42 | 43 | 44 | 45 | 46 | 47 |
|---|---|---|---|---|---|---|---|---|
| MSA-Copolymerisat | 60g $A_{14}$ | 60g $A_{14}$ | 60g $A_{14}$ | 60g $A_{14}$ | 60g $A_1$ | 100g $A_{14}$ | 60g $A_3$ | 60g $A_1$ |
| Vernetzer | 20,2g $B_1$ | 16,2g $B_3$ | 18,9g $B_4$ | 17,5g $B_5$ | 11,8g $B_{10}$ | 14,6g $B_{22}$ | 7,5g $B_{11}$ | 10,1g $B_{17}$ |
| Verdünnungsmittel: | | | | | | | | |
| Methoxypropylacetat | 7,0g | 7,0g | 7,0g | 7,0g | | 5,9g | | |
| Butylacetat | | | | | 8,0g | | 4,5g | 8,0g |
| Festgehalt der Bindemittelkombination | 61,2 % | 59,6 % | 60,8 % | 60,0 % | 55,4 % | 58,2 % | 59,9 % | 54,5 % |
| Anfangsviskosität (mPa.s) | 3350 | 5540 | 2360 | 3660 | 4600 | 3750 | 1500 | 1040 |
| Viskosität nach | | | | | | | | |
| 5 - 6 Std. (mPa.s) | 4400 | 5460 | 2990 | 3660 | 3140 | 3450 | 1720 | 3770 |
| 24 Std. (mPa.s) | 6700 | 4700 | 3350 | 2930 | 3450 | 6700 | 1810 | 10470 |
| Aussehen des Films | farblos | farblos | farblos | farblos | farblos | farblos | farblos | farblos |
| MIBK-Wischtest (nach 20 Min./100°C Trocknung) | >100 | >100 | >100 | >100 | >100 | >100 | >100 | >100 |

Vergleichsbeispiele entsprechend DE-OS 2 853 477

In Anlehnung an DE-OS 2 853 477 wurden 3 Polyanhydride hergestellt und jeweils mit dem in DE-OS 2 853 477, Beispiel 1, verwendeten Bisketimin B(V) 1 und den Vernetzer $B_{16}$ bei Raumtemperatur umgesetzt.

Polyanhydridvergleich A (V) 1:

Durch Umsetzung von 1 Mol eines linearen Polypropylenglykols mit einem Molekulargewicht von ca. 1000 g/mol mit 2 Mol Pyromellithdianhydrid bei 150°C erhält man A (V) 1. A (V) 1 entspricht dem Polyanhydrid G aus der DE-OS 2 853 477.

Polyanhydridvergleich A (V) 2:

Durch 2-stündiges Erhitzen von 890 g Leinöl und 238 g Maleinsäureanhydrid auf 160°C erhält man A (V) 2. A (V) 2 ist vergleichbar mit Polyanhydrid F aus der DE-OS 2 853 477.

Polyanhydridvergleich A (V) 3:

20 %ige Lösung von Benzophenon-3,4,3',4'-tetracarbonsäuredianhydrid in DMF. A (V) 3 wird in der DE-OS 2 853 477 in Beispiel 1 verwendet.

Ketiminvergleich B (V) 1:

Umsetzungsprodukt von 1 Mol Hexamethylendiamin mit 2 Mol Methylisobutylketon. B (V) 1 ist das Ketimin A aus der DE-OS 2 853 477, Beispiel 1.

Die Polyanhydridvergleiche A (V) 1, A (V) 2 und A (V) 3 wurden wie in der DE-OS 2 853 477 im Molverhältnis 1:1 mit Ketiminvergleich B (V) 1 abgemischt und die Filme bei Raumtemperatur getrocknet. Zusätzlich wurden A (V) 1, A (V) 2 und A (V) 3 im Gewichtsverhältnis 80:20 mit Ketimin B16 abgemischt und die Filme bei Raumtemperatur getrocknet. Tabelle 5 zeigt die erhaltenen Ergebnisse.

**Tabelle 5** (Vergleichsbeispiele)

| | 1 | 2 | 3 | 4 | 5 | 6 |
|---|---|---|---|---|---|---|
| Polyanhydrid | 100 g $A(V)_1$ | 100 g $A(V)_2$ | 100 g $A(V)_3$ | 80 g $A(V)_1$ | 80 g $A(V)_2$ | 400 g $A(V)_3$ |
| Vernetzer | 23,6 g $B(V)_1$ | 30 g $B(V)_1$ | 25,6 g $B(V)_1$ | 20 g $B_{16}$ | 20 g $B_{16}$ | 20 g $B_{16}$ |
| Anfangsviskosität (mPa.s) | sofort geliert | nach 15 Min. geliert | 43 | 12100 | nach 15 Min. geliert | <40 |
| Viskosität nach 16 Std. (mPa.s) | | | 81 | 25500 | | <40 |
| Aussehen des Films nach 16-20 Std. Lagerung bei Raumtemperatur | | gelb, leicht klebrig | gelb, klebrig | gelb, leicht klebrig | gelb, leicht klebrig | gelb, klebrig |
| MIBK-Wischtest nach 16-20 Std. Lagerung bei Raumtemperatur | | 40 X abgelöst | >100 | 40 X abgelöst | 40 X abgelöst | 100 X abgelöst |

Bei Vergleichsbeispiel 1 erhält man sofort beim Zusammenrühren der Komponenten ein geliertes Produkt, Die Vergleichsbeispiele 2 und 5 zeigen nach Vermischung der Komponenten einen raschen Viskositätsanstieg, innerhalb von etwa 15 Minuten waren die Mischungen geliert. Die aufgezogenen Filme waren nach 16 Stunden Lagerung bei Raumtemperatur noch leicht klebrig und zeigten nur mäßige Lösungsmittelfestigkeit. Die Vergleichsbeispiele 3 und 6 zeigten keinen bzw. nur einen geringen Viskositätsanstieg. Die erhaltenen Filme waren jedoch nach 16 Stunden Lagerung bei Raumtemperatur noch klebrig. Die Vernetzungswerte waren teilweise gut. Hauptnachteil von 3 und 6 sind jedoch die niedrigen Festgehalte von etwa 25 bis 30 %. Die Abmischung 4 zeigte ein normales Viskositätsverhalten. Der Film war jedoch ebenfalls klebrig und nur schwach vernetzt. Alle Filme der Vergleichsbeispiele waren außerdem gelb gefärbt.

**Patentansprüche**

1. Durch den Einfluß von Feuchtigkeit härtbare Bindemittelkombinationen enthaltend
A) Copolymerisate des Molekulargewichtsbereichs Mw von 1500 bis 75 000 von Maleinsäureanhydrid mit anderen olefinisch ungesättigten Monomeren
und
B) organische Polyamine mit ausschließlich in Ald- und/oder Ketimin-blockierter Form vorliegenden Aminogruppen,
dadurch gekennzeichnet, daß es sich bei der Komponente A) um in an sich bekannter Weise hergestellte Copolymerisate von
a) 3 bis 45 Gew.-% Maleinsäureanhydrid,
b) 5 bis 80 Gew.-% Monomeren der Formel

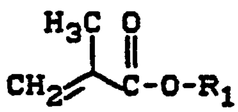 ,

und/oder der Formel

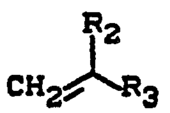 ,

C) 15 bis 92 Gew.-% Monomeren der Formel

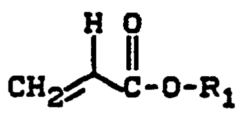 ,

und
d) 0 bis 20 Gew.-% an flüssigen Butadien(co)polymerisaten eines als Zahlenmittel bestimmten mittleren Molekulargewichts von 500 bis 3500 und einer Viskosität bei 20°C von 200 bis 50 000 mPa.s und einer Iodzahl nach Wijs von 380 bis 470 g Iod/100 g Substanz
handelt, wobei sich die genannten Prozentsätze zu 100 ergänzen, und wobei in den genannten Formeln
$R_1$ für einen aliphatischen oder cycloaliphatischen, gegebenenfalls Sauerstoff, Schwefel oder Stickstoff als Heteroatome enthaltenden Kohlenwasserstoffrest mit 1 bis 12 Kohlenstoffatomen steht,
$R_2$ für Wasserstoff, eine Methyl- oder Ethylgruppe oder für Chlor oder Fluor steht, und
$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteratome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht.

2. Bindemittelkombinationen gemäß Anspruch 1, dadurch gekennzeichnet, daß sie als weitere Komponente
C) Amidgruppen aufweisende Umsetzungsprodukte von
i) Copolymerisaten A)
mit

ii) sowohl freie als auch blockierte, insgesamt mindestens 2 primäre und gegebenenfalls sekundäre Aminogruppen aufweisenden organischen Polyaminen, die (im statistischen Mittel) höchstens eine freie primäre oder sekundäre Aminogruppe und mindestens eine in Ald- und/oder Ketiminblockierter Form vorliegende primäre Aminogruppe aufweisen,
enthalten.

3. Bindemittelkombinationen gemäß Anspruch 1 und 2, dadurch gekennzeichnet, daß die Mengenverhältnisse der Einzelkomponenten A), B) und gegebenenfalls C) einem Äquivalentverhältnis von Anhydridgruppen zu Ald- und/oder Ketimingruppen von 0,25:1 bis 5:1 entsprechen.

4. Bindemittelkombinationen gemäß Anspruch 1 bis 3, dadurch gekennzeichnet, daß die Komponente A)
a) 7 bis 30 Gew.-% Maleinsäureanhydrid,
b) 10 bis 50 Gew.-% mindestens eines Monomeren der Formeln

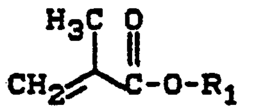 oder 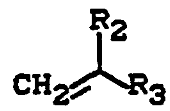 ,

und

c) 25 bis 60 Gew.-% mindestens eines Monomeren der Formel

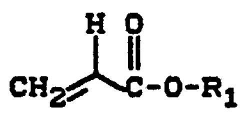

in copolymerisierter Form aufweisen, wobei sich die Prozentsätze zu 100 ergänzen, und wobei $R_1$, $R_2$ und $R_3$ die in Anspruch 1 genannte Bedeutung haben.

5. Bindemittelkombinationen gemäß Anspruch 1 bis 4, dadurch gekennzeichnet, daß die Komponente A) ein Copolymerisat darstellt, welches pro 100 Gew.-Teilen Maleinsäureanhydrid 60 bis 140 Gew.-Teile an Monomeren ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

6. Bindemittelkombinationen gemäß Anspruch 1 bis 5, dadurch gekennzeichnet, daß die Komponente B) aus mindestens einem organischen Diamin besteht, welches 2 primäre, aliphatisch oder cycloaliphatisch gebundene in Ald- und/oder Ketimin-blockierter Form vorliegende Aminogruppen aufweist, und durch an sich bekannte Umsetzung von
i) organischen Diaminen mit 2 primären, aliphatisch und/oder cycloaliphatisch gebundenen Aminogruppen des Molekulargewichtsbereichs 88 bis 400 mit
ii) aliphatischen oder cycloaliphatischen Ketonen des Molekulargewichtsbereichs 72 bis 200 und/oder aliphatischen Aldehyden des Molekulargewichtsbereichs 58 bis 128
hergestellt worden ist.

7. Bindemittelkombination gemäß Anspruch 1 bis 5, dadurch gekennzeichnet, daß als Komponente B) solche Polyamine mit mindestens zwei primären in Aldund/oder Ketimin-blockierter Form vorliegenden Aminogruppen eingesetzt werden, die durch Blockierung der primären Aminogruppen eines Polyamins mit mindestens zwei primären Aminogruppen und mindestens einer sekundären Aminogruppe durch Reaktion mit Aldehyden und/oder Ketonen und anschließende Umsetzung der verbleibenden sekundären Aminogruppen mit Diisocyanaten erhalten worden sind.

8. Verfahren zur Herstellung von Bindemittelkombinationen gemäß Anspruch 1 bis 7, dadurch gekennzeichnet, daß man die Maleinsäureanhydridcopolymerisate A) mit B) organischen Polyaminen mit ausschließlich in Ald- und/oder Ketimin-blockierter Form vorliegenden primären Aminogruppen und gegebenenfalls organischen Polyaminen mit freien und in Ald- und/oder Ketimin-blockierter Form vorliegenden Aminogruppen, die höchstens eine freie und mindestens eine blockierte Aminogruppe aufweisen, gegebenenfalls unter Mitverwendung von Lösungsmitteln und/oder sonstigen aus der Lacktechnologie bekannten Hilfs- und Zusatzstoffen miteinander vermischt, wobei die Mengenverhältnisse der Einzelkomponenten unter Einbeziehung der zwischen freien Aminogruppen und Anhydridgruppen spontan ablaufenden Kondensationsreaktion so wählt, daß in dem resultierenden Gemisch auf jede blockierte Aminogruppe 0,25 bis 5 Anhydridgruppen entfallen.

9. Verwendung der Bindemittelkombinationen gemäß Anspruch 1 bis 7 als Bindemittel in unter dem Einfluß von Feuchtigkeit aushärtbaren Lacken, Beschichtungs- oder Dichtmassen.

## Claims

1. Binder combinations hardenable under the influence of moisture, containing
A) copolymers in the molecular weight range Mw of from 1500 to 75,000 of maleic acid anhydride with other olefinically unsaturated monomers and
B) organic polyamines containing amino groups present exclusively in an aldimine-blocked and/or ketimine-blocked form
characterised in that component A) is a copolymer prepared in known manner from
a) 3 to 45% by weight of maleic acid anhydride,
b) 5 to 80% by weight of monomers corresponding to the following formula

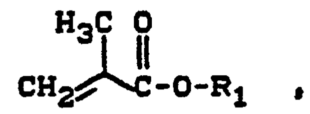

and/or the following formula

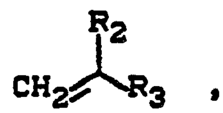

c) 15 to 92% by weight of monomers corresponding to the following formula

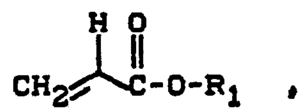

and
d) 0 to 20% by weight of liquid butadiene (co)-polymers having a number average molecular weight of from 500 to 3500 and a viscosity at 20°C of from 200 to 50,000 mPas and an iodine number according to Wijs of from 380 to 470 g of iodine per 100 g of substance,
the above mentioned percentages adding up to 100 and the symbols in the above formulae having the following meanings:
$R_1$ stands for an aliphatic or cycloaliphatic hydrocarbon group having 1 to 12 carbon atoms and optionally containing oxygen, sulphur or nitrogen as hetero atoms,
$R_2$ stands for hydrogen, a methyl or ethyl group or chlorine or fluorine, and
$R_3$ stands for an aliphatic hydrocarbon group having 2 to 15 carbon atoms, a cycloaliphatic hydrocarbon group having 5 to 10 carbon atoms, an araliphatic hydrocarbon group having 7 to 18 carbon atoms, an aromatic hydrocarbon group having 6 to 12 carbon atoms, chlorine, fluorine, a nitrile group or a hydrocarbon group having 2 to 18 carbon atoms and containing one or more hetero atoms from the group consisting of oxygen, sulphur and nitrogen in the form of ether, ester, amide, urethane, urea, thioester, thioether, oxirane, ketone, lactam or lactone groups.

2. Binder combinations according to Claim 1, characterised in that they contain, as further component,
C) amide group-containing reaction products of
i) copolymers A) with
ii) organic polyamines containing a total of at least two, both free and blocked, primary and optionally secondary amino groups and having (on statistical average) at the most one free primary or secondary amino group and at least one primary amino group blocked with aldimine and/or ketimine.

3. Binder combinations according to Claims 1 and 2, characterised in that quantitative ratios of the individual components A), B) and optionally C) correspond to an equivalent ratio of anhydride groups to aldimine and/or ketimine groups of from 0.25:1 to 5:1.

4. Binder combinations according to Claims 1 to 3, characterised in that component A) contains
a) from 7 to 30% by weight of maleic acid anhydride,
b) from 10 to 50% by weight of at least one monomer corresponding to one of the following formulae:

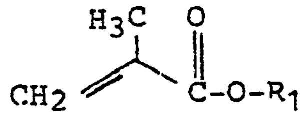

or

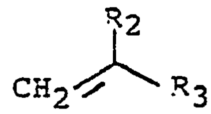

and

c) from 25 to 60% by weight of at least one monomer corresponding to the following formula

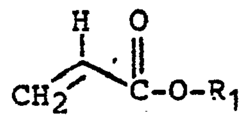

in a copolymerised form, the percentages adding up to 100 and $R_1$, $R_2$ and $R_3$ have the meanings indicated in Claim 1.

5. Binder combinations according to Claims 1 to 4, characterised in that component A) is a copolymer containing, in a copolymerised form and per 100 parts by weight of maleic acid anhydride: from 60 to 140 parts by weight of monomers selected from styrene, vinyl toluene, α-methylstyrene, α-ethylstyrene, diethyl styrenes substituted in the nucleus and optionally in the form of isomeric mixtures, isopropyl styrenes, butyl styrenes and methoxy styrenes, ethylvinyl ether, n-propylvinyl ether, isopropylvinyl ether, n-butylvinyl ether, isobutylvinyl ether, vinyl acetate, vinyl propionate, vinyl butyrate and any mixtures of these monomers, optionally in addition to other comonomers.

6. Binder combinations according to Claims 1 to 5, characterised in that component B) consists of at least one organic diamine containing two primary, aliphatically or cycloaliphatically bound amino groups present in an aldimine-blocked and/or ketimineblocked form and prepared by the reaction known per se of

i) organic diamines containg 2 primary, aliphatically and/or cycloaliphatically bound amino groups in the molecular weight range of from 88 to 400 with

ii) aliphatic or cycloaliphatic ketone in the molecular weight range of from 72 to 200 and/or aliphatic aldehydes in the molecular weight range of from 58 to 128.

7. Binder combination according to Claims 1 to 5, characterised in that the polyamines used as component B) are polyamines which have at least 2 primary amino groups present in an aldimine-blocked and/or ketimine-blocked form and have been obtained by blocking of the primary amino groups of a polyamine having at least two primary amino groups and at least one secondary amino group by a reaction with aldehydes and/or ketones followed by reaction of the remaining secondary amino groups with diisocyanates.

8. Process for the preparation of binder combinations according to Claims 1 to 7 characterised in that the maleic acid anhydride copolymers A) are mixed with B) organic polyamines containing primary amino groups present exclusively in an aldimine-blocked and/or ketimine-blocked form and optionally organic polyamines containing free amino groups and amino groups in an aldimine-blocked and/or ketimine-blocked form and containing at the most one free and at least one blocked amino group, optionally with the addition of solvents and/or other auxiliary agents and additives known from lacquer technology, the quantitative ratios of the individual components, taking into account the condensation reaction taking place spontaneously between the free amino groups and the anhydride groups, are chosen so that the resulting mixture contains from 0.25 to 5 anhydride groups for each blocked amino group.

9. Use of the binder combinations according to Claims 1 to 7 as binders in lacquers, coating compounds or sealing compounds of capable of hardening under the influence of moisture.

## Revendications

1. Combinaisons de liants durcissables sous l'action de l'humidité, contenant

A) des copolymères à poids moléculaire Mw dans l'intervalle de 1500 à 75 000 d'anhydride maléique avec d'autres monomères à insaturation oléfinique

et

B) des polyamines organiques avec des groupes amino se présentant uniquement sous forme aldimino-et/ou cétiminobloquée,

caractérisées en ce qu'il s'agit pour le composant A) de copolymères fabriqués de façon connue de

a) 3 à 45% en poids d'anhydride maléique,

b) 5 à 80% en poids de monomères de formule

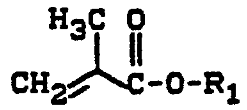 ,

et/ou de formule

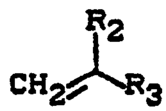 ,

c) 15 à 92% en poids de monomères de formule

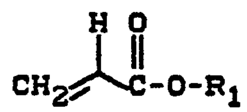 ,

et

d) 0 à 20% en poids de (co)polymères liquides de butadiène d'un poids moléculaire moyen exprimé par une moyenne en nombre de 500 à 3500, d'une viscosité de 200 à 50 000 mPa.s à 20°C et d'un indice d'iode selon Wijs de 380 à 470 g d'iode/100 g de substance,

les pourcentages cité formant un total de 100 et les symboles des formules ayant les significations suivantes:

$R_1$ un reste hydrocarboné aliphatique ou cycloaliphatique avec 1 à 12 atomes de carbone, contenant éventuellement comme hétéroatome de l'oxygène, du soufre ou de l'azote,

$R_2$ l'hydrogène, un groupe méthyle ou éthyle, ou le chlore, ou le fluor, et

$R_3$ un reste hydrocarboné aliphatique avec 2 à 15 atomes de carbone, un reste hydrocarboné cycloaliphatique avec 5 à 10 atomes de carbone, un reste hydrocarboné araliphatique avec 7 à 18 atomes de carbone, un reste hydrocarboné aromatique avec 6 à 12 atomes de carbone, le chlore, le fluor, un groupe nitrile ou un reste hydrocarboné avec 2 à 18 atomes de carbone, contenant un ou plusieurs hétéroatomes du groupe comportant l'oxygène, le soufre et l'azote sous forme de groupes éther, ester, amide, uréthane, urée, thioester, thioéther, oxirane, cétone, lactame ou lactone.

2. Combinaisons de liants selon la revendication 1, caractérisés en ce qu'ils possèdent comme autres composants

C) des produits contenant des groupes amide, résultant de la réaction de

i) des copolymères A)

avec

ii) des polyamines organiques, tant libres qu'également bloquées, comportant en tout au moins deux groupes amino primaires et éventuellement secondaires, qui comportent (en moyenne statistique) au plus un groupe amino primaire ou secondaire libre et au moins un groupe amino primaire sous forme aldiminoet/ou cétiminobloquée.

3. Conbinaisons de liants selon les revendications 1 et 2, caractérisées en ce que les rapports de mélange des composants individuels A), B) et éventuellement C) correspondent à un rapport des équivalents entre les groupes anhydrides et les groupes aldimine et/ou cétimine de 0,25:1 à 5:1.

4. Combinaisons de liants selon les revendications 1 à 3, caractérisées en ce que les composants A) présentent:

a) 7 à 30% en poids d'anhydride maléique,

b) 10 à 50% en poids d'au moins un monomère des formules

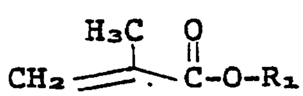 et/ou 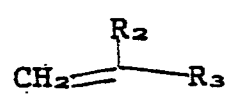

et

c) 2 à 60% en poids de monomères de formule

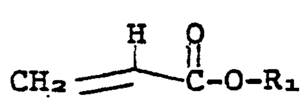

sous forme copolymérisée, les pourcentages formant un total de 100 et $R_1$, $R_2$ et $R_3$ ayant les significations décrites dans la revendication 1.

5. Combinaisons de liants selon les revendications 1 à 4, caractérisées en ce que le composant A) est un copolymère contenant, pour 100 parties en poids d'anhydride maléique, 60 à 140 parties en poids d'autres monomères choisis dans le groupe comportant le styrène, le vinyltoluène, 1, l'α-méthylstyrène, l'α-éthylstyrène, les diéthylstyrènes, les isopropylstyrènes, les butylstyrènes et les méthoxystyrènes, substitués au noyau, éventuellement sous forme de mélanges d'isomères, les éthers éthylvinyliques, les éthers n-propylvinyliques, les éthers isopropylvinyliques, les éthers n-butylvinyliques, les éthers n-isobutylvinyliques, l'acétate de vinyle, le propionate de vinyle, le butyrate de vinyle, et des mélanges quelconques de ces monomères, sous forme de copolymères, éventuellement à côté d'autres comonomères.

6. Combinaisons de liants selon les revendications 1 à 5, caractérisées en ce que le composant B) se compose d'au moins une diamine organique présentant 2 groupes amino primaires sous forme aldimino- et/ou cétiminobloquée, fixés sur des radicaux aliphatiques ou cycloaliphatiques et a été fabriqué par la réaction connue en soi

i) de diamines organiques avec 2 groupes amino primaires ayant un poids moléculaire dans l'intervalle de 8 à 400, fixés sur des radicaux aliphatiques et/ou cycloaliphatiques, avec

ii) des cétones aliphatiques ou cycloaliphatiques ayant un poids moléculaire dans l'intervalle de 72 à 200 et/ou des aldéhydes aliphatiques ayant un poids moléculaire dans l'intervalle de 58 à 128.

7. Combinaison de liants selon les revendications 1 à 5, caractérisée en ce que l'on utilise comme composant B) des polyamines avec au moins deux groupes amino primaires présents sous forme aldimino- et/ou cétiminobloquée, obtenus en bloquant les groupes amino primaires d'une polyamine possédant au moins deux groupes amino primaires et au moins un groupe amino secondaire en la faisant réagir avec des aldéhydes et/ou des cétones puis en faisant réagir les restes amino secondaires restants avec des diisocyanates.

8. Procédé pour la fabrication de combinaisons de liants selon les revendications 1 à 7, caractérisé en ce que l'on mélange ensemble les copolymères d'anhydride maléique A) avec des polyamines organiques B) comportant des groupes amino primaires exclusivement sous forme aldimino- et/ou cétiminobloquée et éventuellement des polyamines organiques comportant des groupes amino présents sous forme libre et aldimino et/ou cétiminobloquée présentant au plus un groupe amino libre et au moins un groupe amino bloqué le cas échéant en utilisant des solvants et/ou d'autres adjuvants et additifs connus de la technologie des vernis et peintures, les rapports quantitatifs des mélanges des composants individuels étant choisis, compte tenu de la réaction de condensation spontanée entre les groupes amino libres et les groupes anhydride, de manière telle qu'il y ait dans le mélange résultant 0,25 à 5 groupes anhydride pour chaque groupe amino bloqué.

9. Utilisation des combinaisons de liants selon les revendications 1 à 7 comme liants dans des vernis, peintures, produits de revêtement ou produits d'étanchéité durcissant sous l'influence de l'humidité.